# EUROPEAN PATENT SPECIFICATION

(11) **EP 1 752 971 B1**
(45) Date of publication and mention of the grant of the patent: **15.09.2010**
(21) Application number: 05743267.6
(22) Date of filing: 27.05.2005
(51) Int. Cl.: G11B 5/72, G11B 5/80, B44F 1/02, B44F 1/08, G06K 19/06

(54) **MAGNETIC RECORDING MEDIUM AND PRODUCTION METHOD THEREFOR**
MAGNETISCHES AUFZEICHNUNGSMEDIUM UND HERSTELLUNGSVERFAHREN DAFÜR
SUPPORT D"ENREGISTREMENT MAGNÉTIQUE ET PROCEDE DE FABRICATION DE CELUI-CI

(30) Priority: 31.05.2004 JP 2004161228
(43) Date of publication of application: 14.02.2007
(73) Proprietor: DIC Corporation, Tokyo (JP)
(72) Inventor: YAMAZAKI, Yoshikazu, Saitama 3650028 (JP); YANO, Daisuke, Saitama 3650042 (JP)
(74) Representative: Albrecht, Thomas
(86) International application number: PCT/JP2005/009760
(87) International publication number: WO 2005/116994

(56) References cited:
- EP-A- 0 609 806
- WO-A-03/037993
- JP-A- 2 122 421
- JP-A- 8 025 859
- JP-A- 2001 011 404
- JP-A- 2002 192 869
- JP-A- 2002 304 718
- JP-A- 2003 228 812
- JP-A- 2004 025 809

## Description

### TECHNICAL FIELD

The present invention relates to a card-like magnetic recording medium with a novel metallic appearance; a method for manufacturing the magnetic recording medium; and a laminate to be transferred for manufacturing the magnetic recording medium. More particularly, the present invention relates to a card-like magnetic recording medium which shows glistening brilliance with high luminance due to the multi-directional reflection from glistening particles, and can easily adjust the lightness and chroma of a background color.

### BACKGROUND ART

In recent years, a card design having glistening brilliance has been used in a magnetic card required to have excellent design characteristics such as a credit card and a bankcard. The aforementioned magnetic card is manufactured by applying glistening particles which are used in an automobile body or the like to a card substrate. The glistening particles are prepared by coating a flaky substrate made from glass or the like as a base material with a metal or the like. When a layer containing the particles is provided on the card, the particles can multi-directionally reflect incident light which arrives at the card on the particle's surface having high reflectivity, and produce a lot of luminescent spots with high luminance on the card. Moreover, the card shows high design-characteristics because the distribution state and luminance of the luminescent spots can change according to a viewing direction.

On the other hand, from the viewpoint of design compatibility with the whole card, a magnetic stripe section provided on a magnetic card preferably has a design in which the magnetic stripe section has the background color similar to the color of a card substrate of the magnetic card, has glistening brilliance, and furthermore can be set at an arbitrary hue for the above-described background color.

However, when a glistening coating layer containing glistening particles, a binder resin and a color pigment as needed is used in the configuration of the magnetic stripe section, the magnetic stripe section can not acquire high chroma and lightness, because the glistening particles themselves are inferior in masking ability, and as a result, can not completely mask a black or brown color originating from a magnetic powder which is essentially contained in a magnetic recording layer of a magnetic card. On the other hand, when the magnetic stripe section adopts the glistening coating layer containing an increased amount of color pigment so as to mask sufficiently the color of the magnetic recording layer, the magnetic stripe section loses the glistening brilliance originating in glistening particles because incident light easily attenuates in the coating layer. For this reason, it has been difficult to use an arbitrary hue for the background color while maintaining the brilliance of the glistening particles, and to impart the uniform brightness not only on the part on which the magnetic stripe is formed but also on the whole surface of the card, and consequently a degree of freedom in the step of imparting a design onto the card has been limited.

For instance, a magnetic recording medium is disclosed which tries to acquire glossiness and a distinct hue of the surface of a magnetic card, without masking the surface of a magnetic recording layer with a metal vapor-deposited layer. The magnetic recording medium is prepared by directly forming a colored layer which includes a pearly (pearl color) pigment formed of mica or micaceous iron oxide having the surface coated with titanium dioxide or zirconium dioxide on the magnetic recording layer, so as to impart the distinct hue with glossiness (Patent Document 1).

However, in the method, when the colored layer employs mica as a base material of the pearly pigment, the magnetic recording medium shows poor glistening brilliance, and can not show high chroma for a background color because mica cannot sufficiently mask the magnetic recording layer. In addition, when the colored layer employs micaceous iron oxide as a base material of the pearly pigment, the base material itself appears as a red, so that the method can be applied to a reddish hue but cannot be applied to other hues.

On the other hand, a vapor-deposited layer of aluminum or tin is widely used as a masking layer, for a method of masking a magnetic recording layer. These masking layers can mask a hue of a magnetic recording layer with a small film thickness. However, these masking layers make the background of a magnetic recording medium too bright because they have high reflectivity, and accordingly diminish the glistening appearance peculiar to glistening particles when the glistening particles are employed, which is inconvenient. It is generally difficult to set the reflectance at a low level by controlling the vapor-deposited layer into an extremely thin film.

A technology is also disclosed for the purpose of completely masking the hue of a magnetic recording layer by using a transfer-type magnetic tape which has been prepared by stacking a protective layer, a colored layer, a masking layer, a magnetic recording layer and an adhesive layer on a substrate for transfer, in this order from a side close to the substrate. The film thickness of the masking layer containing a binder resin and fine flakes obtained from a metallic thin film is controlled into 1 micron or lower (Patent Document 2) so as not to deteriorate the recording/reproducing characteristics. However, it is not clear whether a magnetic recording medium comprising both of a layer which has a composition of the masking layer of the aforementioned cited document and a glistening coating layer formed thereon can achieve a magnetic stripe with the glistening brilliance, can realize the lightness and chroma of the background color, and can control them over a wide range without reducing a reproduced output while achieving masking of black or dark brown colors of the magnetic recording layer, and it has not been examined.

On the other hand, in the field of painting a car body, a method is disclosed which arranges a metallic layer containing an aluminum powder under a glistening coating layer as a masking layer (Patent Document 3).

However, the metallic layer described in the cited document requires a considerably large film thickness in order to mask an underlayer, and when the layer structure is applied to a magnetic card as it is, the magnetic recording layer inevitably has greatly degraded the recording/reproducing characteristics because the combination of the masking layer and the glistening coating layer is too thick.
Patent Document 1: Japanese Unexamined Patent Application, First Publication No. Hei 2-122421
Patent Document 2: Japanese Unexamined Patent Application, First Publication No. 2002-304718
Patent Document 3: Japanese Unexamined Patent Application, First Publication No. Hei 2-160079

### DISCLOSURE OF INVENTION

A problem to be solved by the present invention is to provide a card-like magnetic recording medium which is superior in recording/reproducing characteristics and has an appearance having glistening brilliance and a background color which can have various hues, chroma and lightness; a method for manufacturing the magnetic recording medium; and a laminate to be transferred which is used in the manufacturing method.

The present invention provides a card-like magnetic recording medium comprising a non-magnetic substrate and a laminate containing a magnetic recording layer wherein the laminate is placed in at least a portion of the non-magnetic substrate; wherein the laminate comprises a light reflection quantity controlling layer and a glistening coating layer, wherein the light reflection quantity controlling layer is formed on the magnetic recording layer, has a thickness of 2 µm or less, includes a binder resin and at least one of a scale-like metal powder and fine flakes obtained from a metallic thin film, and controls reflectance of incident light and a masking degree of a color of the magnetic recording layer, wherein the content of the scale-like metal powder and/or the fine flakes is 10 to 50 mass% with respect to 100 parts by weight of a solid content of a paint for the light reflection quantity controlling layer, and the glistening coating layer is formed on the light reflection quantity controlling layer and includes a binder resin and glistening particles;
said control of the masking degree and the reflectance is conducted by adjusting (i) the film thickness of the light reflection quantity controlling layer and (ii) a weight ratio of the scale-like metal powder and/or the fine flakes to a solid content of a paint for the light reflection quantity controlling layer; and
the maximum reflectance of diffuse reflection light with respect to incident lights having a wavelength from 400 to 700 nm is 20 to 70% on a portion where the glistening coating layer is provided.

The layer containing the glistening particles according to the present invention is formed on the magnetic recording layer of the magnetic card, via the light reflection quantity controlling layer containing the scale-like metal powder and/or the fine flakes obtained from a metallic thin film and the binder resin; and furthermore the maximum reflectance of diffuse reflection light with respect to incident lights having a wavelength of 400 to 700 nm on the region in which the glistening coating layer is formed is controlled from 20 to 70%. Accordingly, the magnetic recording medium can have an appearance wherein glitter caused by the diffused reflection of incident light exists against the background of a background color which can have various grades of lightness, while masking a hue of the magnetic recording layer without greatly degrading recording/reproducing characteristics of the magnetic recording layer. As a result, the magnetic card can acquire greatly improved design characteristics.

The present invention further provides a method for manufacturing a card-like magnetic recording medium, which comprises a non-magnetic substrate and a magnetic recording layer provided in at least a portion of the non-magnetic substrate and has a pattern with a background color and luminescent spots uniformly distributed in the background color on the magnetic recording layer, comprising:
forming a light reflection quantity controlling layer having a thickness of 2 µm or less, which controls reflectance of incident light and a masking degree of a color of the magnetic recording layer, and contains a binder resin and at least one of a scale-like metal powder and fine flakes obtained from a metallic thin film, wherein the content of the scale-like metal powder and/or the fine flakes is 10 to 50 mass% with respect to 100 parts by weight of a solid content of a paint for the light reflection quantity controlling layer, and a glistening coating layer, which contains a binder resin and glistening particles, on a magnetic recording layer in that order, so that
   the film thickness of the light reflection quantity controlling layer and the content of the scale-like metal powder and/or the fine flakes are lower than the required value for completely masking the magnetic recording layer, to obtain a card-like magnetic recording medium having controlled lightness and chroma of the background color.

It becomes possible to adjust the reflectance and lightness of a light reflection quantity controlling layer, by forming the light reflection quantity controlling layer such that the film thickness of the light reflection quantity controlling layer or the content of a scale-like metal powder or fine flakes obtained from a metallic thin film is changed to a lower value than necessary for completely masking the magnetic recording layer. Accordingly, it is possible to adjust the maximum reflectance of a diffuse reflection light regarding incident lights of a wavelength from 400 to 700 nm between 20 to 70%, on a portion where the glistening coating layer is formed on the light reflection quantity controlling layer.

The present invention still further provides a laminate to be transferred, which is usable for a manufacturing method for a card-like magnetic recording medium wherein a transfer step is included. The laminate comprises a glistening coating layer containing glistening particles with a mirror-like luster surface, a light reflection quantity controlling layer and a magnetic recording layer laminated on a substrate for transfer in that order, and the light reflection quantity controlling layer includes a binder resin and at least one of a scale-like metal powder and fine flakes obtained from a metallic thin film.

It becomes possible to easily produce a magnetic card having a good design imparted by the glistening coating layer, by using the laminate to be transferred according to the present invention in a transfer step.

A card-like magnetic recording medium according to the present invention which has a light reflection quantity controlling layer containing a binder resin and a scale-like metal powder or fine flakes obtained from a metallic thin film formed on a magnetic recording layer and a layer containing glistening particles further formed thereon can achieve to masking of a hue of the magnetic recording layer without greatly degrading recording/reproducing characteristics of the magnetic recording layer and can provide a glistening appearance. The card-like magnetic recording medium also has excellent design characteristics, because the light reflection quantity controlling layer reflects incident light, and thereby can enhance the glistening appearance based on the diffused reflection of incident light due to the glistening particles.

The light reflection quantity controlling layer with high masking ability can be extremely thinned, so that it becomes possible to control an amount of reflecting light regarding the incident light and a degree of masking the color of the magnetic recording layer, by adjusting the film thickness of the light reflection quantity controlling layer in such a range as not to seriously affect recording/reproducing characteristics. Accordingly, the light reflection quantity controlling layer can adjust the lightness of the background color at the glistening appearance by controlling its film thickness, and consequently the lightness only of the background color can be controlled while maintaining glistening brilliance. In addition, when employing a color pigment together with the glistening particles in a glistening coating layer, it is possible to appropriately adjust the lightness, chroma: and hue of the background color over a wide range, without deteriorating the brilliance of the luminescent spots caused by the glistening particles. The above-described lightness, chroma and hue can also be adjusted by controlling the content of a scale-like metal powder or fine flakes obtained from a metallic thin film in a light reflection quantity controlling layer.

Due to the card-like magnetic recording medium according to the present invention, it is possible to obtain a card-like magnetic recording medium which can show adequate magnetic recording/reproducing characteristics and causes no readout error for recorded information, in the respect of the characteristics required for a magnetic card.

In addition, a transfer-type magnetic tape which can be prepared by cutting a laminate to be transferred according to the present invention into a width of a magnetic stripe can be used in a process for manufacturing a magnetic card required to have an excellent design such as a credit card and a bankcard, and can realize a card design having glistening brilliance.

### BRIEF DESCRIPTION OF THE DRAWINGS

Fig. 1 is a constructional cross-sectional view of a transfer-type magnetic tape.
Fig. 2 is a constructional cross-sectional view after a laminate containing a magnetic recording layer has been transferred onto a card substrate by using a transfer-type magnetic tape.
Fig. 3 is a constructional cross-sectional view after a laminate containing a magnetic recording layer has been embedded into a card substrate by conducting thermal-press of the laminate subsequent to transfer of a transfer-type magnetic tape onto the card substrate.

### Description of Symbols

- 1: substrate for transfer
- 2: protective layer
- 3: glistening coating layer
- 4: light reflection quantity controlling layer
- 5: magnetic recording layer
- 6: adhesive layer
- 7: card substrate

### BEST MODE FOR CARRYING OUT THE INVENTION

The present invention will be described in detail below.

First of all, one embodiment of a laminate to be transferred according to the present invention and a magnetic recording medium for a card according to the present invention, which is manufactured from the laminate, will be described in detail with reference to the drawings.

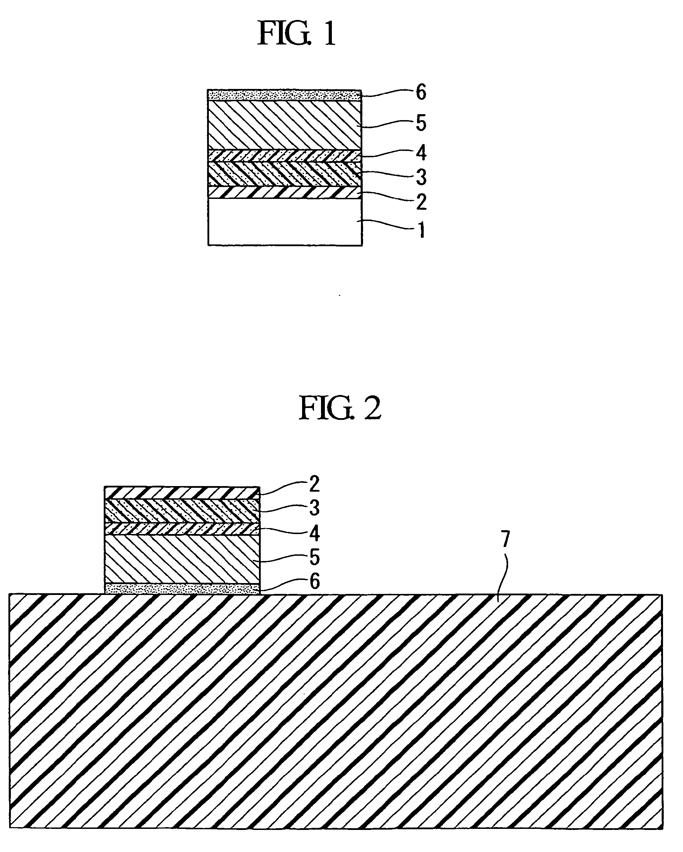

As is shown in Fig. 1, the lamina to be transferred according to the present invention is manufactured by sequentially stacking a substrate 1 for transfer; a protective layer 2 which can be peeled from the substrate 1 for transfer and which has a function for protecting a magnetic stripe as the outermost surface layer of the magnetic card after the laminate has been transferred onto the card, and can be formed as needed; a glistening coating layer 3; a light reflection quantity controlling layer 4 provided on the glistening coating layer 3; a magnetic recording layer 5 provided on the light reflection quantity controlling layer 4; and an adhesive layer 6 provided on the magnetic recording layer 5 as needed.

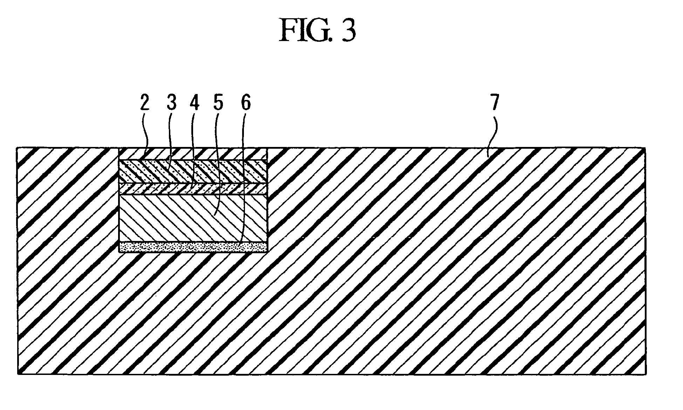

The magnetic recording medium for the card according to the present invention can be manufactured by using the above-described laminate to be transferred. Specifically, the magnetic recording medium for the card can be manufactured by the steps of: preparing a transfer-type magnetic tape by cutting the laminate to be transferred; overlaying an adhesive layer of the transfer-type magnetic tape onto a card substrate so that they can face each other as shown in Fig. 2; bonding the laminate containing the magnetic recording layer to the card substrate by heating and pressing them; and then peeling and removing a substrate for transfer of the tape to transfer the layer structure of the laminate (transfer-type magnetic tape) onto the surface of the card substrate such that a protective layer of the tape is provided as the outermost surface layer. Subsequently, the card substrate having the laminate thereon is thermal-pressed as needed to embed the layers containing the magnetic recording layer into the card substrate as shown in Fig 3, and a magnetic card is obtained by stamping the resultant card substrate into a predetermined size.

Each layer included in a laminate to be transferred will be described in detail below in order of being formed on a substrate for transfer.

As a substrate for transfer in the present invention, any well-known ordinary films can be used. Examples of the substrate for transfer includes, for instance, plastics films of polyesters such as polyethylene terephthalate, polyolefins such as polypropylene, cellulose derivatives such as cellulose triacetate and polyamides. Among those, polyethylene terephthalate is preferable which has both of tensile strength and heat resistance. A thickness of the substrate for transfer is not limited in particular, but is normally 3 to 100 µm, and is preferably 5 to 50 µm.

A protective layer can be used in a laminate to be transferred which is used in a process for manufacturing a card-like magnetic recording medium according to the present invention. The protective layer can be obtained, for instance, by applying a paint for the protective layer, wherein the paint includes a binder resin, a filler and the like dissolved and/or mixed in a solvent, onto a substrate for transfer with a well-known ordinary method such as a reverse method, a gravure method and a die coat method.

The binder resin included in the protective layer can be appropriately selected as needed. For instance, examples of the binder resin include: a cellulose resin; a butyral resin; an acryl resin; a polyurethane resin; a polyester resin; a vinyl chloride resin such as a copolymer of vinyl chloride and vinyl acetate and a copolymer prepared by using vinyl alcohol, maleic anhydride or acrylic acid to the vinyl chloride and vinyl acetate; an epoxy resin; a phenol resin; a melamine resin; and a mixture of them.

A solvent usable for a coating liquid for the protective layer can be appropriately selected as needed. For instance, examples of the solvent include; ketones such as acetone, methyl ethyl ketone and cyclohexanone; esters such as methyl acetate, ethyl acetate and butyl acetate; alcohols such as ethanol; and hydrocarbons such as hexane, toluene and xylene. The aforementioned solvent can be mixed with another solvent or more, and be used.

Furthermore, the protective layer can contain soy bean lecithin, microsilica, wax or the like as needed, as a coating modifier. It is preferable to add a curing agent such as a polyisocyanate compound to the coating liquid in order to crosslink between molecules of a binder resin, because the durability of the protective layer is thereby improved.

The thickness of a dried coated film of the protective layer can be appropriately selected as needed, but is preferably small from the viewpoint of recording/reproducing characteristics. The thickness is preferably 0.1 to 5 µm in consideration of the balance between strength, durability and the like, and further preferably is 0.3 to 2 µm.

A glistening coating layer included in a laminate to be transferred which is used in a card-like magnetic recording medium according to the present invention contains a binder resin and glistening particles. The glistening coating layer according to the present invention can be formed, for instance, by the steps of: preparing a paint for the glistening coating layer by mixing the glistening particles and a coloring agent as needed with a binder resin and a solvent which can dissolve the binder resin, and dispersing the glistening particles and the like into the solvent with a well-known usual method such as a twin-roll mill, a triple roll mill, a ball mill, a sand mill and a dispersion mill; applying the obtained paint onto the protective layer with a well-known usual method such as a reverse method, a gravure coating method and a die coat method; and drying the applied paint. When glistening particles have a flaky shape, it is preferable to use a device with a low dispersion force such as a dispersion mill, in a dispersion step so that the shape of the glistening particles is not destroyed. It is also preferable to apply the paint with a reverse method which can set a circulation flow quantity at a high level in the application so that the flaky particles do not sediment.

It is also possible to thermo-set the above-described paint by adding an isocyanate compound into the paint. As a solvent to be used in the paint for the glistening coating layer, a well-known ordinary solvent can be used. For instance, the solvent described in the above-described protective layer can be used.

A glistening particle to be used in the present invention has a mirror-like lustrous surface with high reflectivity, and is prepared, for instance, by coating the surface of an organic or inorganic particle with a smooth planar surface with a metal or a metallic oxide by a vacuum deposition method or a plating method. A base material to be coated is preferably a flaky substrate since light can be reflected from the wide mirror-like lustrous surface of a glistening particle obtained from the flaky substrate and a glistening coating layer with high brilliance can be produced using the glistening particle.

The glistening particle is further preferably a particle prepared by employing glass or aluminum oxide as the base material which is the flaky substrate and coating the surface with metal or metallic oxide, because the base material has a smooth surface and accordingly the obtained glistening particle provides high reflectance. When the base material is glass, the base material contains SiO₂ as a main component and occasionally contains a slight amount of ZnO, B₂O₃ and other components.

The flaky glass particle can have a size appropriately selected as needed. Preferably, it has the length of 5 to 40 µm in a plane direction of the flake and a thickness in a range of 1/5 to 1/20 of the length in the plane direction. The width of the flaky glass particle can be appropriately selected. On the other hand, the flaky substrate as a base material which is aluminum oxide can also have a size appropriately selected as needed. Normally, it has the length of 3 to 60 µm in the plane direction of the flake, and preferably of 5 to 30 µm; and has a thickness in a range of 0.1 to 0.8 µm, and preferably of 0.2 to 0.4 µm. Examples of a usable metal for coating the surface of the flaky substrate include; metals such as gold, silver, platinum, palladium, nickel, copper, chromium and tin; and alloys thereof. A suitable method for coating the surface of the flaky substrate with the metal is an electroless plating method. A coated amount (thickness) is 0.01 to 0.3 µm, and is preferably 0.05 to 0.2 µm in particular. The surface of the flaky substrate having been coated with the metal may be further surface-treated appropriately.

Examples of a usable metallic oxide for coating the surface of the flaky substrate include Fe₂O₃, TiO₂, SnO₂ and ZrO₂. A preferred coated amount (thickness) of the metallic oxide is 50 to 200 Å and differs according to a desired interference color to be obtained by the glistening particle. There are the "Metashine" series of products made by Nippon Sheet Glass Incorporated for the glistening particle using glass as a base material, and there are the "Xirallic" series of products made by Merck Co., Ltd. for the glistening particle using aluminum oxide as the base material.

A well-known usual binder resin can be used for a binder resin to be used in a glistening coating layer. Examples of the binder resin include, for instance, a cellulose based resin; a butyral resin; an acryl resin; a polyurethane resin; a polyester resin; vinyl chloride resins such as a copolymer of vinyl chloride and vinyl acetate and a copolymer prepared by using vinyl alcohol, maleic anhydride or acrylic acid in addition to the vinyl chloride and vinyl acetate; an epoxy resin; a phenol resin; a melamine resin; a polyimide resin; a polyamide resin; a rosin-modified maleic resin; a polystyrene resin; a shellac; an alkyd resin; and a mixture of those resins.

A glistening coating layer formed in the present invention can employ a coloring agent for providing a color to be a background for light diffuse-reflected provided by glistening particles. Examples of a pigment to be used as the coloring agent include ; inorganic pigments such as alumina, titanium oxide, chromium oxide, iron oxide, zinc oxide and barium sulfate; and organic pigments such as an azo-based pigment, a phthalocyanine-based pigment, a quinacridon-based pigment, a perylene-based pigment, an anthraquinone-based pigment, a thioindigo-based pigment and an indanthrene-based pigment. The pigment can be used without particular limitation. The glistening coating layer can also use a dye such as a phthalocyanine dye, an azo dye, a nitro dye, a quinoline dye, a methine dye, an azine dye and a phthalein dye, as a substitute for the above-described pigment or together with the pigment. The use of the color agent makes it possible to adjust the chroma and lightness of the background color to a great extent, by adjusting a reflectance of incident light on a light reflection quantity controlling layer, by adjusting a degree of masking of the magnetic recording layer, and by using the coloring agent, by adjusting the amount of the blended coloring agent. The pigment or the dye to be used as the above-described coloring agent absorbs the incident light to be reflected by the glistening particles and attenuates it, so that an excess amount of the pigment and/or dye is contained in the coating layer, it may decrease the brilliance of the glistening coating layer. When pigment is used for the coloring agent, it preferably has a small particle size and high transparency. The content of the used pigment differs according to types of the pigments, but is preferably 20 mass% or less with respect to the content of a binder resin.

A glistening coating layer is preferably thick in order to emphasize glistening brilliance caused by multidirectional diffused reflection, which is the feature of glistening particles. However, when the glistening coating layer is too thick, it increases a spacing loss and tends to decrease a reproduced output. For this reason, when employing a thick glistening coating layer, it becomes necessary to compensate for the decrease of the reproduced output by increasing the film thickness of a magnetic recording layer. However, a resolving power, which is another important characteristic for magnetic recording, deteriorates with the increase of spacing and the increase of the film thickness of the magnetic recording layer itself. As a result of this, an error tends to occur when the recorded information is reproduced. For this reason, there is an upper limit to the film thickness of the magnetic recording layer.

In consideration of the above, the film thickness of the glistening coating layer can be appropriately selected as needed, but is preferably 2 to 5 µm, and particularly preferably is 3 to 4 µm. It is preferable for obtaining a sufficient light diffuse-reflected by the glistening particles contained in the thin film that the glistening coating layer contains a high concentration of the glistening particles. A weight ratio (PWC) of a solid content of the glistening particles with respect to 100 parts by weight of a solid content of a paint for the glistening coating layer is preferably 20 to 45 mass%, and is further preferably 25 to 35 mass%. When the glistering coating layer contains more than 45 mass% of the glistening particles, the glistering coating layer tends to become brittle and the degree of the surface roughness of the coating film tends to degrade.

A light reflection quantity controlling layer to be formed in the present invention contains a binder resin, and a scale-like metal powder or fine flakes obtained from a metallic thin film.

Examples of a usable metal for both of the scale-like metal powder and the fine flakes obtained from a metallic thin film include; aluminum, gold, silver, copper, brass, titanium, chromium, nickel, nickel-chrome alloy and stainless steel.

The scale-like metal powder can be formed by spreading a powder into a scale-like shape by a ball mill or the like. Examples of a method for manufacturing the fine flakes obtained from a metallic thin film include: forming a thin film by vapor deposition when a low-melting-point metal such as aluminum is used, forming a thin film as a foil when a metal having malleability such as aluminum, gold, silver and copper is used, or forming a thin film by sputtering or the like when a high-melting-point metal having no malleability is used; and manufacturing the thin grains from the thin film.

The scale-like metal powder and the fine flakes obtained from a metallic thin film have a high capability of masking the magnetic recording layer, and can mask a hue of the magnetic recording layer with a small thickness of the controlling layer.

The shape and size of the metal powder or the thin grains can be appropriately selected as needed, but the length in parallel to the plane is preferably 3 to 30 µm, more preferably is 5 to 25 µm, and further preferably is 10 to 15 µm. The thickness of the metal powder is preferably about 0.1 to 1 µm. On the other hand, the thickness of the fine flakes obtained from a metallic thin film is preferably 0.01 to 0.1 µm, and is further preferably 0.03 to 0.08 µm. When the light reflection quantity controlling layer employs a scale-like metal powder, a formed coating film shows a low optical reflectance, because the metal powder has unevenness on its surface, and the particles hardly orient to a planar direction in the coating film due to their large film thickness. On the other hand, when the light reflection quantity controlling layer employs fine flakes obtained from a metallic thin film, a formed coating film shows a high optical reflectance which is not obtained by the conventional scale-like metal powder, because the fine flakes obtained from a metallic thin film have a smooth surface and can highly orient to a parallel direction to the surface of an article to be coated. In the present invention, any one of the scale-like metal powder and the fine flakes obtained from a metallic thin film may be used as needed or may be used in combination.

Any of binder resins used for a conventional paint, rotogravure ink, flexographic ink, screen ink or the like can be used as the binder resin included in the light reflection quantity controlling layer. For instance, a binder resin to be used in a glistening coating layer of a card-like magnetic recording medium of the present invention is preferably used.

A light reflection quantity controlling layer can be formed by the steps of: preparing a paint for forming the light reflection quantity controlling layer, wherein the paint consists of the binder resin, the scale-like metal powder and/or the fine flakes obtained from a metallic thin film and a solvent, using a well-known kneading machine and a dispersion machine; and applying or printing the paint onto the glistening coating layer by a well-known application method or a printing method. The paint for forming the light reflection quantity controlling layer may contain an additive and a curing agent in addition to the above components.

Various additives used in a conventional paint, gravure ink, flexographic ink, screen ink or the like can be used in the paint for the light reflection quantity controlling layer as needed, in the present invention. Examples of the additives include a coloring pigment, dye, wax, a plasticizer, a leveling agent, a surfactant, a dispersing agent and an antifoaming agent.

The paint for the light reflection quantity controlling layer can further employ various curing agents used in the conventional paint, the gravure ink, the flexographic ink or the screen ink, for the purpose of improving various resistances such as heat resistance and solvent resistance. Examples of the curing agents include; a titanium, aluminum or zinc type metal chelating agent, a silane or titanium type coupling agent, an isocyanate-based curing agent, an epoxy-based curing agent and an ethyleneimine-based curing agent.

As for a solvent to be used in the paint for the light reflection quantity controlling layer, a well-known ordinary solvent used in a conventional paint, a gravure ink, a flexographic ink, a screen ink or the like can be also used. Specifically, for instance, the solvent described in the section of the protective layer can be used.

A function of a light reflection quantity controlling layer is to control the lightness and chroma of a background color of the glistening coating layer. This function can be achieved by adjustments of the reflectance of incident light and a degree of masking a hue of a magnetic recording layer. Such adjustments can provide a change of an amount of light which returns to the surface, after light is incident on the surface of the magnetic stripe of a magnetic card at first, passes through the above-described glistening coating layer, and is reflected to the light reflection quantity controlling layer. Particularly when the glistening coating layer colors the background color with the use of a color pigment, the laminate can have the function of adjusting the lightness and chroma of the background color over a wide range, by adjusting the reflectance and masking degree of the light reflection quantity controlling layer and an amount of the above-described color pigment to be used.

When a magnetic stripe employs the glistening coating layer containing glistening particles and the color pigment in combination with a light reflection quantity controlling layer having low reflectivity, it shows an appearance with low chroma and lightness, because the magnetic recording layer itself arranged under the light reflection quantity controlling layer has low optical reflectivity. On the other hand, when the magnetic stripe section employs the same glistening coating layer as described above in combination with a light reflection quantity controlling layer having high reflectivity, it shows an appearance with high chroma and lightness, because the amount of the light reflected by the light reflection quantity controlling layer increases.

Furthermore, the light reflected by the light reflection quantity controlling layer is repeatedly reflected in between the adjusting layer and the glistening particles so that high reflectivity of the light reflection quantity controlling layer provides the large amount of light reflected from the glistening particles. However, when the reflectivity of the light reflection quantity controlling layer becomes too high, the magnetic stripe section shows rather low brilliance because the background light becomes too bright and consequently the contrast between glistening appearance and the background color of the glistening particles decreases.

When the maximum reflectance of a diffuse reflection light regarding incident lights having a wavelength of 400 to 700 nm, which is evaluated at the region having a glistening coating layer formed therein, is 20 to 70%, the glistening coating layer preferably possesses both the clear glistening brilliance due to glistening particles and the background color with a bright hue. The glistening coating layer more preferably exhibits the characteristics when the maximum reflectance of the diffuse reflection light is 25 to 65%, and further preferably exhibits when it is 30 to 60%. In addition, in any case, the glistening coating layer preferably does not show excessively high luster, because otherwise the luster of a background color itself decreases the glistening appearance due to the glistening particles.

In addition, the maximum reflectance can be measured by a method shown in Examples, which will be described later. Moreover, in the present invention, it can be specifically determined whether the light reflection quantity controlling layer has completely masked a magnetic recording layer or not, by measuring, for instance, the difference of the lightness, chroma and the chromaticity between a substrate for a card having the light reflection quantity controlling layer formed on the magnetic recording layer and the substrate having the controlling layer but no magnetic recording layer, with a color-difference meter. In addition, in the present invention, it is preferable to reduce the film thickness of the light reflection quantity controlling layer, the content of a metallic powder and/or thin grains such that they are smaller than values necessary for completely masking the magnetic recording layer. Then, it becomes possible to adjust the lightness of the background color over a wide range while maintaining the glistening appearance with high luminance, by using the controlled layer as described above in combination with the glistening coating layer.

An optical reflectivity of a light reflection quantity controlling layer depends on a content of a scale-like metal powder or fine flakes obtained from a metallic thin film per unit surface area of the layer. The optical reflectivity can be adjusted by changing a weight ratio (PWC) of a solid content of the scale-like metal powder and/or the fine flakes obtained from a metallic thin film with respect to 100 parts by weight of a solid content of a paint for the light reflection quantity controlling layer, and/or by changing the film thickness of the light reflection quantity controlling layer. The contents (PWC) of the scale-like metal powder and/or the fine flakes obtained from a metallic thin film in a paint composition for the light reflection quantity controlling layer according to the present invention are 10 to 50 mass%.

In addition, the thickness of the coating film of the light reflection quantity controlling layer can be appropriately selected as needed. However, in order for a magnetic card to achieve adequate magnetic recording/reproducing characteristics and eliminate an error when reading out a record, it is very important for the total film thickness of all layers containing a glistening coating layer and a light reflection quantity controlling layer (though excluding a magnetic recording layer) existing in a closer side to a card surface than the magnetic recording layer in the present invention to be designed so as not to exceed 6 µm. Furthermore, the film thickness of the light reflection quantity controlling layer is preferably as low as possible, because more adequate brilliance can be obtained when the glistening coating layer according to the present invention has a larger film thickness. Accordingly, the film thickness of the light reflection quantity controlling layer is preferably 0.1 µm or higher but 2 µm or lower in consideration of the film thickness of the glistening coating layer and the other layers.

A reflectivity and degree of masking of the magnetic recording layer of the light reflection quantity controlling layer to be formed in the present invention can be adjusted by changing the film thickness of the adjusting layer or the amount of a scale-like metal powder or fine flakes obtained from a metallic thin film contained therein, as described above. In this regard, a light reflection quantity controlling layer using a vapor-deposited film of A1 or Sn, which is ordinarily used for masking the magnetic recording layer, cannot stably adjust the reflectivity. The reason is that the adjustment of the reflectivity is only made by adjusting the thickness of the vapor-deposited film, but it is not easy to form a film having an extremely small thickness while controlling the amount to be vapor-deposited.

On the other hand, when the hue of a magnetic recording layer is masked by using a masking layer including a white pigment such as titanium oxide instead of the light reflection quantity controlling layer, the masking layer tends to decrease the reproduced output and the resolving power since the masking layer including a white pigment needs to be more thick. In addition, the masking layer cannot show effect of enhancing a glistening appearance provided by the glistening particles, because the masking layer itself has low reflectivity.

In the above case, when control of the hue or concentration using the color pigment is conducted in order to adjust the background color, the glistening coating layer may decrease the glistening appearance. The reason is that brilliance achieved by the glistening particles is greatly affected by change of absorptivity of incident light.

In order for a card-like magnetic recording medium according to the present invention to achieve a glistening coating layer having glistening brilliance, moderate lightness and high chroma, the light reflection quantity controlling layer shows reflectance range of the diffuse reflection light, such that the maximum reflectance regarding incident lights having wavelength of 400 to 700 nm, which is included in a visible light range, is in the range of 20 to 70%. When the reflectance of the diffuse reflection light is less than 20%, effective chroma is not obtained because the background color becomes dark. In addition, the amount of light reflected by the light reflection quantity controlling layer back to the glistening particles also decreases, so that the number of luminescent spots showing brilliance and luminosity tends to decrease even though the glistening coating layer shows brilliance. On the other hand, when the reflectance exceeds 70%, the intensity of light reflected by the light reflection quantity controlling layer becomes much higher than that of light reflected by the glistening particles contained in the glistening coating layer, which makes the background color too bright and tends to decrease the glistening brilliance. The maximum reflectance of the diffuse reflection light at the light reflection quantity controlling layer is preferably in a range of 25 to 65%, and is further preferably in a range of 30 to 60%.

The light reflection quantity controlling layer containing a scale-like metal powder and/or fine flakes obtained from a metallic thin film to be used in the present invention tends to be a film which does not show high luster compared to such a film having high luster formed by the vapor deposition of a metal as a normal masking layer. Excessively high luster tends to deteriorate the brilliance provided by glistening particles, and accordingly in this regard as well, it is preferable to use the light reflection quantity controlling layer including a scale-like metal powder and/or fine flakes obtained from a metallic thin film.

A magnetic recording layer in a laminate to be transferred which is used for manufacturing a card-like magnetic recording medium according to the present invention can be formed, for instance, by the steps of: forming a protective layer, a glistening coating layer and a light reflection quantity controlling layer on a substrate for transfer in that order; further applying a paint for the magnetic recording layer containing a magnetic powder, a binder resin and a solvent for dissolving the binder resin therein; orienting the magnetic powder; and drying the applied paint.

Examples of a usable magnetic powder include well-known magnetic powders such as y-iron oxide, magnetite, cobalt-covered iron oxide, chromium dioxide, ferrous metal magnetic powder, barium ferrite and strontium ferrite. Preferably the powder has coercive force in a range of 20 to 320 kA/m.

A well-known usual binder resin can be used as a binder resin to be used in the magnetic recording layer, and, for instance, the binder resin described in the section of the glistening coating layer or the like can be used in general. The paint for the magnetic recording layer can also employ an isocyanate compound for thermo-setting. In addition, examples of a usable solvent for the paint for the magnetic recording layer include, for instance, the solvent described in the section of the protective layer or the like in general.

A dry film thickness of the magnetic recording layer can be appropriately selected as needed, but is preferably in a range of 2 to 50 µm, and is further preferably in a range of 5 to 20 µm.

The magnetic paint can also contain the following as needed: auxiliaries such as a surface active agent, a silane coupling agent, a plasticizer, a wax and a silicone oil; and further fillers such as carbon black.

Paint for a magnetic recording layer can be obtained, for instance, by kneading and dispersing the above-described magnetic powder, the binder resin and the solvent with a well-known usual method. Examples of a usable kneading/dispersing machine include, for instance, a twin-roll mill, a triple roll mill, a ball mill, a Henschel mixer, a cobol mill, a sand mill, a dispersion mill, a homogenizer and a kneader.

A method for applying the paint for the magnetic recording layer is not limited in particular, and a well-known usual application method may be used. After a predetermined amount of the magnetic paint has been applied, the magnetic powder is oriented so that the easily-magnetizable direction orients to a longitudinal direction of the applied magnetic recording layer, and the magnetic paint is dried. Examples of a usable application method include, for instance, a gravure method, a reverse method, a transfer-roll coating method, a kiss coating method and a dye coating method.

In addition, it is preferable to subject the paint applied by the above-described application method to the magnetic-field orientation treatment before the coated film dries, from the viewpoint of recording/reproducing characteristics. As for a method of orienting the magnetic field, a well-known method using a repulsion-opposing permanent magnet or a solenoid type electromagnet can be used. The intensity of the magnetic field is preferably in a range of 1,000 to 6,000 G

An adhesive layer can be used in a laminate to be transferred which is used in a process for manufacturing a card-like magnetic recording medium according to the present invention. The adhesive layer can be obtained by the general steps of: preparing an adhesive paint by dissolving a resin showing heat-sensitive adhesiveness into a solvent, and mixing/stirring the solution; applying the adhesive paint onto a magnetic recording layer with a well-known method such as a reverse method, a gravure method and a die coating method; and drying the applied adhesive paint.

Examples of the resin showing the heat-sensitive adhesiveness include; for instance, vinyl chloride resins such as a copolymer of vinyl chloride and vinyl acetate, and a copolymer of vinyl alcohol, maleic anhydride, acrylic acid or the like in addition to the above-described components; polyester resins; acryl resins; polyimide resins; and polyurethane resins. The solvent to be used in the adhesive layer can employ, for instance, a solvent described in the section of a protective layer.

A film thickness of the adhesive layer can be appropriately selected as needed, but is preferably 0.5 to 15 µm and is particularly preferably 0.5 to 5 µm.

As described above, the details of each layer were described in the order of stacking the respective layers on a substrate for transfer, when manufacturing the laminate to be transferred according to the present invention. A card-like magnetic recording medium according to the present invention can be manufactured in the above-described transfer step by one operation with the use of the laminate to be transferred. A light reflection quantity controlling layer and a glistening coating layer according to the present invention may cover the whole surface of the card substrate. In that case, the glistening coating layer and the light reflection quantity controlling layer may be formed by an application or transfer operation in a step other than that for a magnetic recording layer. Furthermore, the magnetic recording layer to be coated may be formed so as to cover the whole substrate for the card and can be appropriately formed by using a well-known procedure for manufacturing the magnetic card.

Thus, the laminate to be transferred is made by stacking each layer on the substrate for transfer in a reverse order to that on a real card-like magnetic recording medium. When the substrate for transfer is transparent, a pattern to be actually transferred onto the substrate for the card can be confirmed from the substrate for transfer side. Accordingly, by confirming the pattern from the transparent substrate side for transfer, it is possible to produce the laminate to be transferred so that the maximum reflectance of a diffuse reflection light regarding an incident lights having wavelength of 400 to 700 nm is in a range of 20 to 70% in a region having the above-described glistening coating layer formed thereon. The maximum reflectance of the diffuse reflection light is preferably in a range of 25 to 65%, and is further preferably in a range of 30 to 60%. As described above, the method for manufacturing a magnetic card by forming each layer on a substrate for the card through a transfer step was described in detail. In addition, the card-like magnetic recording medium according to the present invention may be manufactured by the steps of applying the above-described respective layers. The card-like magnetic recording medium may also be manufactured by the steps of forming some layers in a transfer step and forming the other layers in an application step.

### Examples

Next, the present invention will be described in more detail with reference to Examples and Comparative Examples, but is not limited to Examples. In the following description, "part" shall mean part by mass.

A substrate for transfer and each paint shown below are used in Examples and Comparative Examples.

Substrate for transfer: polyethylene terephthalate film with the thickness of 24 µm Paint for protective layer

| | |
|---|---|
| polyvinyl butyral resin ("S-Lec BM-1" made by Sekisui Chemical Co., Ltd.) | 10 parts |
| MEK | 35 parts |
| toluene | 35 parts |
| ethanol | 20 parts |
| polyisocyanate | 4 parts |
| ("Hardener No. 50 (active ingredient: 50%)" made by Dainippon Ink & Chemicals Incorporated) | |

The paint for a protective layer was prepared by the steps of: stirring all the materials except for polyisocyanate with a dispersion mill to form a uniform solution; adding the polyisocyanate to the solution; and further stirring the resultant solution with a dispersion mill to uniform the solution.

### Paint [A] for glistening coating layer: color pigment with yellow

| | |
|---|---|
| glistening particles | 10 parts |
| ("Metashine ME2025PS" made by Nippon Sheet Glass Incorporated) | |
| color pigment A (yellow color: isoindoline yellow) | 2 parts |
| vinyl chloride - vinyl acetate copolymer resin | 16 parts |
| ("VAGH" made by Union Carbide Corp.) | |
| polyurethane resin | 4 parts |
| ("TS-03" made by Dainippon Ink & Chemicals Incorporated) | |
| methyl ethyl ketone | 65 parts |
| toluene | 65 parts |
| cyclohexanone | 15 parts |
| polyisocyanate | 3 parts |
| ("Hardener No. 50 (active ingredient: 50%)" made by Dainippon Ink & Chemicals Incorporated) | |

The paint [A] for a glistening coating layer was prepared by the steps of: stirring all the materials except for the glistening particles and the polyisocyanate with a dispersion mill to form a uniform solution; adding the glistening particles to the solution; further stirring the resultant dispersion with a dispersion mill to uniform the dispersion; adding the polyisocyanate to the dispersion; and further stirring the resultant dispersion with a dispersion mill to uniform it.

### Paint [B] for glistening coating layer: color pigment with blue

The paint [B] for the glistening coating layer was prepared by the same method as in the case of the paint [A] for the glistening coating layer, except that a color pigment B (blue: phthalocyanine blue) was substituted for a color pigment A (yellow: isoindoline yellow) in the paint [A] for the glistening coating layer.

### Paint [C] for glistening coating layer: color pigment with green

The paint [C] for the glistening coating layer was prepared by the same method as in the case of the paint [A] for the glistening coating layer, except that a color pigment C (green: phthalocyanine green) was substituted for a color pigment A (yellow: isoindoline yellow) in the paint [A] for the glistening coating layer.

### Paint [D] for glistening coating layer: color pigment with red

The paint [D] for the glistening coating layer was prepared by the same method as in the case of the paint [A] for the glistening coating layer, except that a color pigment D (red: perylene red) was substituted for a color pigment A (yellow: isoindoline yellow) in the paint [A] for the glistening coating layer.

### Paint [E] for pearl-toned glossy coating layer: color pigment with yellow

| | |
|---|---|
| pearl-toned glossy particles | 10 parts |
| (pearl-toned pigment "Iriodin 153" formed from mica type iron oxide | |
| material coated with titanium oxide, made by Merck & Co.) | |
| color pigment A (yellow: isoindoline yellow) | 2 parts |
| vinyl chloride - vinyl acetate copolymer resin | 16 parts |
| ("VAGH" made by Union Carbide Corp.) | |
| polyurethane resin | 4 parts |
| ("TS-03" made by Dainippon Ink & Chemicals Incorporated) | |
| methyl ethyl ketone | 65 parts |
| toluene | 65 parts |
| cyclohexanone | 15 parts |
| polyisocyanate | 3 parts |
| ("Hardener No. 50 (active ingredient: 50%)" made by Dainippon Ink & Chemicals Incorporated) | |

A paint [E] for a pearl-toned glossy coating layer was prepared by using the above-described materials with the same method as in the case of a paint [A] for a glistening coating layer.

### · Paint [F] for pearl-toned glossy coating layer: color pigment with blue

A paint [F] for the glistening coating layer was prepared by the same method as in the case of the paint [E] for a pearl-toned glossy coating layer, except that a color pigment B (blue: phthalocyanine blue) was substituted for a color pigment A (yellow: isoindoline yellow) in the paint [E] for the pearl-toned glossy coating layer.

### Paint [G] for pearl-toned glossy coating layer: color pigment with green

A paint [G] for a glistening coating layer was prepared by the same method as in the case of the paint [E] for a pearl-toned glossy coating layer, except that a color pigment C (green: phthalocyanine green) was substituted for a color pigment A (yellow: isoindoline yellow) in the paint [E] for the pearl-toned glossy coating layer.

### · Paint [H] for pearl-toned glossy coating layer: color pigment with red

A paint [H] for a glistening coating layer was prepared by the same method as in the case of the paint [E] for a pearl-toned glossy coating layer, except that a color pigment D (red: perylene red) was substituted for a color pigment A (yellow: isoindoline yellow) in the paint [E] for the pearl-toned glossy coating layer.

### · Paint [I] for pearl-toned glossy coating layer: containing no color pigment

| | |
|---|---|
| pearl-toned glossy particles | 12 parts |
| ("Iron Oxide Pearly Pigment AM-200" made by Titan Kogyo K.K.) | |
| vinyl chloride - vinyl acetate copolymer resin | 16 parts |
| ("VAGH" made by Union Carbide Corp.) | |
| polyurethane resin | 4 parts |
| ("TS-03" made by Dainippon Ink & Chemicals Incorporated) | |
| methyl ethyl ketone | 65 parts |
| toluene | 65 parts |
| cyclohexanone | 15 parts |
| polyisocyanate | 3 parts |
| ("Hardener No. 50 (active ingredient: 50%)" made by Dainippon Ink & Chemicals Incorporated) | |

A paint [I] for a pearl-toned glossy coating layer was prepared by using the above-described materials with the same method as in the case of the paint [A] for a glistening coating layer.

### · Paint [J] for pearl-toned glossy coating layer: color pigment with blue

| | |
|---|---|
| pearl-toned glossy particles | 10 parts |
| ("Iron Oxide Pearly Pigment AM-200" made by Titan Kogyo K. K.) | |
| color pigment B (blue: phthalocyanine blue) | 2 parts |
| vinyl chloride - vinyl acetate copolymer resin | 16 parts |
| ("VAGH" made by Union Carbide Corp.) | |
| polyurethane resin | 4 parts |
| ("TS-03" made by Dainippon Ink & Chemicals Incorporated) | |
| methyl ethyl ketone | 65 parts |
| toluene | 65 parts |
| cyclohexanone | 15 parts |
| polyisocyanate | 3 parts |
| ("Hardener No. 50 (active ingredient: 50%)" made by Dainippon Ink & Chemicals Incorporated) | |

A paint [J] for a pearl-toned glossy coating layer was prepared by using the above-described materials with the same method as in the case of the paint [A] for a glistening coating layer.

### · Paint [A] for light reflection quantity controlling layer

| | |
|---|---|
| scale-like metal powder: aluminum powder | 10 parts |
| ("210 EA" made by Showa Aluminum Powder K.K.) | |
| vinyl chloride - vinyl acetate copolymer resin | 20 parts |
| ("VAGH" made by Union Carbide Corp.) | |
| polyurethane resin | 5 parts |
| ("TS-03" made by Dainippon Ink & Chemicals Incorporated) | 75 parts |
| methyl ethyl ketone | |
| toluene | 75 parts |
| cyclohexanone | 17 parts |
| polyisocyanate | 15 parts |
| ("Hardener No. 50 (active ingredient: 50%)" made by Dainippon Ink & Chemicals Incorporated) | |

The paint [A] for a light reflection quantity controlling layer was prepared by the steps of: stirring all the above-described materials except for the scale-like metal powder and the polyisocyanate with a dispersion mill to form a uniform solution; adding the scale-like metal powder to the solution; further stirring the resultant dispersion with a dispersion mill to uniform the dispersion; adding the polyisocyanate to the dispersion; and further stirring the resultant dispersion with a dispersion mill to uniform it.

### Paint [B] for light reflection quantity controlling layer

fine flakes obtained from a metallic thin film: vapor deposited aluminum flake pigment 10 parts

| | |
|---|---|
| ("Metasheen Slury KM-100" made by Toyo Aluminum K.K.) | |
| vinyl chloride - vinyl acetate copolymer resin | 40 parts |
| ("VAGH" made by Union Carbide Corp.) | |
| polyurethane resin | 10 parts |
| ("TS-03" made by Dainippon Ink & Chemicals Incorporated) | |
| methyl ethyl ketone | 218 parts |
| toluene | 218 parts |
| cyclohexanone | 49 parts |
| polyisocyanate | 30 parts |
| ("Hardener No. 50 (active ingredient: 50%)" made by Dainippon Ink & Chemicals Incorporated) | |

The paint [B] for a light reflection quantity controlling layer was prepared by using the above-described materials with the same method as in the case of the paint [A] for a light reflection quantity controlling layer.

### Paint [C] for light reflection quantity controlling layer fine flakes obtained from a metallic thin film: vapor deposited aluminum flake pigment 20 parts

| | |
|---|---|
| ("Metasheen Slury KM-100" made by Toyo Aluminum K.K.) | |
| vinyl chloride - vinyl acetate copolymer resin | 40 parts |
| ("VAGH" made by Union Carbide Corp.) | |
| polyurethane resin | 10 parts |
| ("TS-03" made by Dainippon Ink & Chemicals Incorporated) | |
| methyl ethyl ketone | 218 parts |
| toluene | 218 parts |
| cyclohexanone | 49 parts |
| polyisocyanate | 30 parts |
| ("Hardener No. 50 (active ingredient: 50%)" made by Dainippon Ink & Chemicals) | |

The paint [C] for a light reflection quantity controlling layer was prepared by using the above-described materials with the same method as in the case of the paint [A] for a light reflection quantity controlling layer.

### · Paint for magnetic recording layer

| | |
|---|---|
| magnetic powder of barium ferrite | 100 parts |
| ("MC-127" with coercive force of 220 kA/m, made by Toda Kogyo Incorporated) | |
| vinyl chloride - vinyl acetate copolymer resin | 15 parts |
| ("MR-110" made by Nippon Zeon Co., Ltd.) | |
| polyurethane resin | 10 parts |
| ("L7-750" made by Dainippon Ink & Chemicals Incorporated) | |
| MEK | 50 parts |
| toluene | 50 parts |
| cyclohexanone | 25 parts |
| polyisocyanate | 10 parts |
| ("Hardener No. 50 (active ingredient: 50%)" made by Dainippon Ink & Chemicals Incorporated) | |

A paint for a magnetic recording layer was prepared by using the above-described materials with the method shown in Japanese Unexamined Patent Application, First Publication No. Hei 9-59541

### Adhesive paint

| | |
|---|---|
| polyurethane resin | 1 part |
| ("TS-03" made by Dainippon Ink & Chemicals Incorporated) | |
| vinyl chloride - vinyl acetate copolymer resin | 4 parts |
| ("Solbine C5" made by Nissin Chemical Industry Co., Ltd.) | |
| MEK | 45 parts |
| toluene | 50 parts |

The paint for an adhesive layer was prepared by stirring the above-described materials with a dispersion mill to sufficiently dissolve the resins in the solvents and form a uniform solution.

### (Example 1)

A polyethylene terephthalate film with a thickness of 24 µm was employed as a substrate for transfer. The above-described paint for the protective layer, the paint [A] for a glistening coating layer, the paint [A] for a light reflection quantity controlling layer, the paint for a magnetic recording layer and the adhesive paint were applied to one surface of the film in that order each using a reverse coater, and were dried to respectively form a protective coating layer, a glistening coating layer, a light reflection quantity controlling layer, a magnetic recording layer and an adhesive layer. Each layer was formed so as to acquire a film thickness of 1 µm for the protective layer, 3 µm for the glistening coating layer, 0.3 µm for the light reflection quantity controlling layer, 9 µm for the magnetic recording layer, and 1.5 µm for the adhesive layer, after the respective layers had dried. A laminate to be transferred was prepared by cutting the film provided with the above-described respective layers into a width of 1.3 cm (1/2 inch).

The card-like magnetic recording medium was prepared by the steps of: transferring the above prepared laminate to be transferred (transfer-type magnetic tape) onto a card substrate (made by Taihei Chemical Industrial Co., Ltd.) made from polyvinyl chloride, using a card-preparing machine ("LX-EM4" made by Interline Incorporated); removing the substrate for transfer; heat-pressing the card substrate under conditions of 140°C and 0.13 MPa; and then stamping the card substrate into a card shape.

### (Example 2 to Example 25 and Comparative Example 1 to Comparative Example 11)

Card-like magnetic recording media of Example 2 to Example 25 and Comparative Example 1 to Comparative Example 11 were prepared by the steps of: preparing the laminate to be transferred corresponding to the respective Examples with the same method as in the case of Example 1, except that combinations shown Table 1 were employed; transferring the laminate onto a card substrate; and hot-pressing the card substrate.

### · Evaluation method

### (Chroma)

Lightness (L) and chromaticity {a* and b*} were measured on a magnetic stripe section of the obtained magnetic card using "colorimetric color-difference meter SZ-Σ80" made by Nippon Denshoku Kogyo Incorporated, and chroma C*=√(a*2+b*2) was determined by using the measured values. For information, the larger the value of the lightness, the brighter the magnetic stripe section, and the larger the value of the chroma, the more vivid the color of the magnetic stripe section.

### (Diffuse reflection factor)

The maximum reflectance in the specific range was determined by the steps of: measuring a diffuse reflection regarding each incident light included in a visible light range between wavelengths of 400 and 700 nm on a magnetic stripe section of the obtained magnetic card, in other words, on a region having a glistening coating layer therein, by using an integrating sphere method with the use of "Shimadzu Spectrometer UV-3100" made by Shimadzu Incorporated; and selecting the maximum value of diffuse reflection lights in the measured wavelength range.

### (Visual evaluation: brightness and hue)

Brightness and hue on a magnetic stripe section in an obtained magnetic card were evaluated by visual observation. The quality of brightness was visually evaluated from the glistening appearance. The quality of hue was set at "×" for a hue on a sample having no light reflection quantity controlling layer, and was evaluated to be "○" for a hue on a sample having shown an effect of improving chroma.

| | |
|---|---|
| Brightness: | O .. showing brightness with high luminance, |
| | △ .. showing insufficient luminance of brightness, |
| | × .. showing no brightness |
| Hue: | ○ .. showing remarkable improvement in chroma, |
| | △ .. showing little improvement in chroma, |
| | × .. showing no improvement in chroma |

### (Resolving power)

Recording/reproducing characteristics of the obtained magnetic cards were measured in accordance with ISO (International Standardization Organization) /IEC7811-6 using MAGTESTER 2000 made by BARNES Incorporated. In addition, transfer-type magnetic tapes used for preparing the magnetic card samples do not have equal film thicknesses of the magnetic recording layer and the non-magnetic layers other than the magnetic recording layer, so that each sample used for measuring the recording/reproducing characteristics was prepared so as to have a controlled film thickness of a magnetic recording layer in order to make the magnetic recording layer output the same reproduced output value as that of a standard output sample.
○ ... regenerating 90% or more, × ... regenerating less than 90%

**Table 1**

| No. | Glistening/pearl-toned glossy coating film | | Light reflection quantity controlling layer | | a* | b* | Chroma | Lightness | Diffuse reflection factor (%) | Resolving power | Visual evaluation | |
|---|---|---|---|---|---|---|---|---|---|---|---|---|
| | Type | Color of color pigment | Type | Film thickness (µm) | | | | | | | Brightness | Hue |
| Ex. 1 | A | Yellow | A | 0.3 | -1.3 | 14.4 | 14.5 | 41.6 | 26.5 | ○ | ○ | ○-△ |
| Ex. 2 | A | Yellow | A | 0.7 | -1.7 | 18.7 | 18.8 | 48.4 | 34.3 | ○ | ○ | ○ |
| Ex.3 | A | Yellow | A | 1.5 | -2.4 | 22.7 | 22.8 | 54.8 | 41.9 | ○ | ○ | ○ |
| Ex.4 | A | Yellow | B | 0.4 | -3.2 | 21.9 | 22.2 | 53.8 | 50.8 | ○ | ○ | ○ |
| Ex. 5 | A | Yellow | B | 1.4 | -3.2 | 25.2 | 25.4 | 58.9 | 58.6 | ○ | ○ | ○ |
| Ex.6 | A | Yellow | B | 2.0 | -3.3 | 25.8 | 26.0 | 59.9 | 62.0 | ○ | ○-△ | ○ |
| Ex.7 | A | Yellow | C | 2.0 | -3.4 | 26.9 | 27.1 | 60.9 | 66.3 | ○ | △ | ○ |
| Ex.8 | B | Blue | A | 0.3 | -8.2 | -11.7 | 14.3 | 33.1 | 24.3 | ○ | ○ | △ |
| Ex.9 | B | Blue | A | 0.7 | -11.8 | -16.9 | 20.6 | 36.6 | 33.1 | ○ | ○ | ○ |
| Ex.10 | B | Blue | A | 1.5 | -15.0 | -22.0 | 26.6 | 39.9 | 41.0 | ○ | ○ | ○ |
| Ex. 11 | B | Blue | B | 0.4 | -15.1 | -24.1 | 28.5 | 40.9 | 51.3 | ○ | ○ | ○ |
| Ex. 12 | B | Blue | B | 1.4 | -16.5 | -26.7 | 31.4 | 42.6 | 58.7 | ○ | ○ | ○ |
| Ex. 13 | B | Blue | B | 2.0 | -17.1 | -27.7 | 32.5 | 43.2 | 61.7 | ○ | ○-△ | ○ |
| Ex. 14 | C | Green | A | 0.3 | -15.6 | 1.7 | 15.7 | 35.0 | 24.9 | ○ | ○ | △ |
| Ex. 15 | C | Green | A | 0.7 | -19.0 | 2.1 | 19.1 | 38.1 | 33.1 | ○ | ○ | ○ |
| Ex. 16 | C | Green | A | 1.5 | -24.5 | 2.2 | 24.6 | 43.3 | 41.3 | ○ | ○ | ○ |
| Ex. 17 | C | Green | B | 0.4 | -24.2 | 2.1 | 24.3 | 43.0 | 47.6 | ○ | ○ | ○ |
| Ex. 18 | C | Green | B | 1.4 | -27.9 | 2.2 | 28.0 | 46.4 | 58.0 | ○ | ○ | ○ |
| Ex. 19 | C | Green | B | 2.0 | -29.7 | 2.3 | 29.8 | 48.1 | 61.5 | ○ | ○-△ | ○ |
| Ex. 20 | D | Red | A | 0.3 | 21.8 | 4.6 | 22.3 | 32.7 | 28.3 | ○ | ○ | ○-△ |
| Ex. 21 | D | Red | A | 0.7 | 25.2 | 5.3 | 25.7 | 34.1 | 32.8 | ○ | ○ | ○ |
| Ex. 22 | D | Red | A | 1.5 | 31.1 | 5.9 | 31.7 | 36.6 | 40.4 | ○ | ○ | ○ |
| Ex. 23 | D | Red | B | 0.4 | 32.0 | 6.6 | 32.7 | 37.0 | 48.9 | ○ | ○ | ○ |
| Ex. 24 | D | Red | B | 1.4 | 37.4 | 7.1 | 38.0 | 39.2 | 58.6 | ○ | ○ | ○ |
| Ex. 25 | D | Red | B | 2.0 | 39.5 | 7.5 | 40.2 | 40.1 | 62.0 | ○ | ○-△ | ○ |
| Com. Ex. 1 | A | Yellow | None | - | -0.7 | 7.7 | 7.8 | 30.9 | 15.9 | ○ | ○ | × |
| Com. Ex. 2 | B | Blue | None | - | -2.6 | -1.7 | 3.1 | 26.9 | 10.9 | ○ | ○ | × |
| Com. Ex. 3 | C | Green | None | - | -5.4 | 1.5 | 5.6 | 25.6 | 10.1 | ○ | ○ | × |
| Com. Ex. 4 | D | Red | None | - | 7.8 | 3.8 | 8.7 | 27.0 | 13.9 | ○ | ○ | × |
| Com. Ex. 5 | E | Yellow | B | 1.4 | -3.0 | 23.6 | 23.8 | 56.4 | 55.0 | ○ | × | ○ |
| Com. Ex. 6 | F | Blue | B | 1.4 | -15.2 | -24.7 | 29.0 | 41.2 | 54.2 | ○ | × | ○ |
| Com. Ex. 7 | G | Green | B | 1.4 | -27.1 | 2.1 | 27.2 | 45.7 | 56.4 | ○ | × | ○ |
| Com. Ex. 8 | H | Red | B | 1.4 | 36.7 | 6.9 | 37.3 | 38.9 | 57.5 | ○ | × | ○ |
| Com. Ex. 9 | I | None | None | - | 21.4 | 14.1 | 25.6 | 34.0 | 30.5 | ○ | ○ | × |
| Com. Ex. 10 | J | Blue | None | - | 3.8 | -2.7 | 4.7 | 24.8 | 14.8 | ○ | × | × |
| Com. Ex. 11 | J | Blue | B | 1.4 | -2.0 | -1.7 | 2.6 | 23.2 | 10.9 | ○ | × | × |

As is clear from the results shown in Table 1, the present Examples 1 to 25 showed an effect of improving glistening brilliance and the chroma of a hue, and also showed an adequate resolving power, because all the Examples possessed a glistening coating layer, which contains glistening particles made of a flaky substrate coated with a metal or a metallic oxide, and is formed by a method for forming the glistening coating layer according to the present invention, via a light reflection quantity controlling layer containing a metal powder or fine flakes obtained from a metallic thin film. However, as the maximum of a diffuse reflection factor exceeded 60%, the brilliance tended to degrade to a small extent because the background became bright, and as the diffuse reflection factor approached 70%, the brightness tended to degrade. In addition, as the diffuse reflection factor approached 20%, the chroma tended to degrade. In other words, the hue tended to degrade.

On the other hand, Comparative Examples 1 to 4 showed low chroma, in other words, showed insufficient hue on a magnetic stripe, because the Comparative Examples did not have the light reflection quantity controlling layer according to the present invention applied between the magnetic layer and the glistening coating layer.

In addition, Comparative Examples 5 to 8 could not show the glistening brilliance which is a purpose of the present invention, because the Comparative Examples employed a pearl-toned glossy particle (pearl-toned pigment) which is made from mica material coated with titanium oxide and exhibits a pearly luster, instead of a glistening particle used in the glistening coating layer according to the present invention.

In addition, Comparative Example 9 did not show high chroma, because the Comparative Example employed a pearl-toned glossy particle (pearl-toned pigment of iron oxide) made from a MIO material (iron oxide with mica shape) coated with titanium oxide in the glistening coating layer, instead of a color pigment and a glistening particle used in the glistening coating layer according to the present invention, and did not have a light reflection quantity controlling layer applied between the magnetic layer and the glistening coating layer.

In addition, Comparative Examples 10 and 11 showed remarkably degraded chroma and little brilliance in any cases of having the light reflection quantity controlling layer applied between the magnetic layer and the glistening coating layer and having no light reflection quantity controlling layer applied between them, because the Comparative Examples employed the pearl-toned glossy particle (pearl-toned pigment of iron oxide) made from a MIO material (iron oxide with mica shape) coated with titanium oxide and further a blue-colored pigment for its glistening coating layer, instead of a color pigment and a glistening particle used in the glistening coating layer according to the present invention.

As is clear from Table 1, the present Examples can preferably adjust the lightness (diffuse reflection factor) and chroma of a glistening coating layer containing glistening particles by changing the film thickness of a light reflection quantity controlling layer.

The present Examples can adjust their chromas in particular without changing their hues by changing the reflectance of the light reflection quantity controlling layer and masking degree, and accordingly can extremely easily adjust the chroma when adjusting the hue of a background color in combination with pigment.

### INDUSTRIAL APPLICABILITY

The present invention can provide a card-like magnetic recording medium having high luminance and glistening brilliance, of which the chroma and the lightness of the background color can be easily adjusted; a manufacturing method therefor; and a laminate to be transferred used for manufacturing the same.

## Claims

1. A card-like magnetic recording medium comprising a non-magnetic substrate and a laminate containing a magnetic recording layer wherein the laminate is placed in at least a portion of the non-magnetic substrate; wherein
the laminate comprises a light reflection quantity controlling layer and a glistening coating layer, wherein
the light reflection quantity controlling layer is formed on the magnetic recording layer, has a thickness of 2 µm or less, includes a binder resin and at least one of a scale-like metal powder and fine flakes obtained from a metallic thin film, and controls reflectance of incident light and a masking degree of a color of the magnetic recording layer, wherein the content of the scale-like metal powder and/or the fine flakes is 10 to 50 mass% with respect to 100 parts by weight of a solid content of a paint for the light reflection quantity controlling layer, and
the glistening coating layer is formed on the light reflection quantity controlling layer and includes a binder resin and glistening particles;
said control of the masking degree and the reflectance is conducted by adjusting (i) the film thickness of the light reflection quantity controlling layer and (ii) a weight ratio of the scale-like metal powder and/or the fine flakes to a solid content of a paint for the light reflection quantity controlling layer; and
the maximum reflectance of diffuse reflection light with respect to incident lights having a wavelength from 400 to 700 nm is 20 to 70% on a portion where the glistening coating layer is provided.

2. A card-like magnetic recording medium according to claim 1, wherein the maximum reflectance of diffuse reflection light with respect to incident lights having wavelength to 400 and 700 nm is 30 to 60% on a portion where the glistening coating layer of the magnetic recording medium is formed.

3. The magnetic recording medium according to claim 1, wherein the glistening particles comprise a flaky substrate coated with a metal or a metallic oxide.

4. The card-like magnetic recording medium according to claim 1, wherein the flaky substrate is made of glass or aluminum oxide.

5. The card-like magnetic recording medium according to claim 1, wherein the total film thickness of all the layers which are provided on the magnetic recording layer and include the light reflection quantity controlling layer and the glistening coating layer is 6 µm or less.

6. The card-like magnetic recording medium according to any one of claims 1 to 5, wherein the glistening coating layer contains a color pigment.

7. A method for manufacturing a card-like magnetic recording medium, which comprises a non-magnetic substrate and a magnetic recording layer provided in at least a portion of the non-magnetic substrate and has a pattern with a background color and luminescent spots uniformly distributed in the background color on the magnetic recording layer, comprising:
forming a light reflection quantity controlling layer having a thickness of 2 µm or less, which controls reflectance of incident light and a masking degree of a color of the magnetic recording layer, and contains a binder resin and at least one of a scale-like metal powder and fine flakes obtained from a metallic thin film, wherein the content of the scale-like metal powder and/or the fine flakes is 10 to 50 mass% with respect to 100 parts by weight of a solid content of a paint for the light reflection quantity controlling layer, and a glistening coating layer, which contains a binder resin and glistening particles, on a magnetic recording layer in that order, so that
the film thickness of the light reflection quantity controlling layer and the content of the scale-like metal powder and/or the fine flakes are lower than the required value for completely masking the magnetic recording layer, to obtain a card-like magnetic recording medium having controlled lightness and chroma of the background color.

8. The method for manufacturing the card-like magnetic recording medium according to claim 7, wherein the glistening coating layer contains a color pigment.

9. The method for manufacturing the card-like magnetic recording medium according to claim 8, wherein the glistening particle is a particle which is a flaky substrate coated with a metal or a metallic oxide.

10. The method for manufacturing the card-like magnetic recording medium according to claim 8, wherein the flaky substrate is made of glass or aluminum oxide.

11. The method for manufacturing the card-like magnetic recording medium according to claim 7 or 8, wherein the card-like magnetic recording medium is formed by transferring a laminate to be transferred, in which the glistening coating layer containing glistening particles, the light reflection quantity controlling layer, and the magnetic recording layer are laminated on a substrate for transfer in that order.

12. A laminate to be transferred which is used in the method for manufacturing the card-like magnetic recording medium according to claim 11.

13. The method for manufacturing the card-like magnetic recording medium according to claim 7, wherein the maximum reflectance of diffuse reflection light with respect to incident lights having wavelength of 400 to 700 nm on the portion where the glistening coating layer is provided in the card-like magnetic recording medium is controlled between 20 to 70% by adjusting the lightness and chroma of the background color.

14. The card-like magnetic recording medium according to claim 1, wherein at least one of a film thickness of the light reflection quantity controlling layer and the content of the scale-like metal powder and/or the fine flakes obtained from a metallic thin film are lower than the required value for completely masking the magnetic recording layer.

15. The magnetic recording medium according to claim 1, wherein the film thickness of the glistening coating layer is in the range of 2 to 5 µm.

16. The magnetic recording medium according to claim 1, wherein a weight ratio of a solid content of the glistening particles is 20 to 45 mass% with respect to 100 parts by weight of a solid content of a paint for the glistening coating layer.

## Patentansprüche

1. Kartenähnliches magnetisches Aufzeichnungsmedium, umfassend ein nichtmagnetisches Substrat und ein Laminat, enthaltend eine magnetische Aufzeichnungsschicht, wobei das Laminat in mindestens einem Bereich des nichtmagnetischen Substrats angebracht ist; wobei
das Laminat eine Lichtreflexionsmengenkontrollschicht und eine Glanzüberzugsschicht umfasst, wobei
die Lichtreflexionsmengenkontrollschicht auf der magnetischen Aufzeichnungsschicht gebildet ist, eine Dicke von 2 µm oder weniger besitzt, ein Bindeharz und mindestens eines aus einem schuppenartigen Metallpulver und feinen Plättchen, erhalten aus einem metallischen dünnen Film, umfasst, und
die Reflexion einfallenden Lichts kontrolliert und den Maskierungsgrad einer Farbe der magnetischen Aufzeichnungsschicht, wobei der Gehalt des schuppenartigen Metallpulvers und/oder der feinen Plättchen 10 bis 50 Massen-% bezüglich 100 Gewichtsteilen eines Feststoffgehalts eines Anstrichs für die Lichtreflexionsmengenkontrollschicht beträgt, und
die Glanzüberzugsschicht ist auf der Lichtreflexionsmengenkontrollschicht gebildet und umfasst ein Bindeharz und Glanzpartikel;
die Kontrolle des Maskierungsgrads und der Reflexion wird ausgeführt durch Einstellen von (i) der Filmdicke der Lichtmengenreflexionskontrollschicht und (ii) einem Gewichtsverhältnis des schuppenartigen Metallpulvers und/oder der feinen Plättchen zu einem Feststoffgehalt eines Anstrichs für die Lichtreflexionsmengenkontrollschicht; und
die maximale Reflexion diffusen Reflexionslichts bezüglich einfallenden Lichts mit einer Wellenlänge von 400 bis 700 nm beträgt 20 bis 70% in einem Bereich, in welchem die Glanzüberzugsschicht vorliegt.

2. Kartenähnliches magnetisches Aufzeichnungsmedium gemäß Anspruch 1, wobei die maximale Reflexion diffusen Reflexionslichts bezüglich einfallenden Lichts mit einer Wellenlänge von 400 bis 700 nm 30 bis 60% in einem Bereich beträgt, in welchem die Glanzüberzugsschicht des magnetischen Aufzeichnungsmediums gebildet ist.

3. Magnetisches Aufzeichnungsmedium gemäß Anspruch 1, wobei die Glanzpartikel ein schuppiges Substrat, überzogen mit einem Metall oder metallischen Oxid, umfassen.

4. Kartenähnliches magnetisches Aufzeichnungsmedium gemäß Anspruch 1, wobei das schuppige Substrat aus Glas oder Aluminiumoxid hergestellt ist.

5. Kartenähnliches magnetisches Aufzeichnungsmedium gemäß Anspruch 1, wobei die Gesamtfilmdicke aller auf der magnetischen Aufzeichnungsschicht angebrachten Schichten, welche auch die Lichtreflexionsmengenkontrollschicht und die Glanzüberzugsschicht umfassen, 6 µm oder weniger beträgt.

6. Kartenähnliches magnetisches Aufzeichnungsmedium gemäß einem beliebigen der Ansprüche 1 bis 5, wobei die Glanzüberzugsschicht ein Farbpigment enthält.

7. Verfahren zur Herstellung eines kartenähnlichen magnetischen Aufzeichnungsmediums, welches ein nichtmagnetisches Substrat und eine magnetische Aufzeichnungsschicht umfasst, angebracht in mindestens einem Bereich des nichtmagnetischen Substrats, und Muster mit einer Hintergrundfarbe und leuchtenden Spots, die gleichmäßig in der Hintergrundfarbe auf dem magnetischen Aufzeichnungsmedium verteilt sind, umfassend:
Bilden einer Lichtreflexionsmengenkontrollschicht mit einer Dicke von 2 µm oder weniger, welche die Reflexion einfallenden Lichts kontrolliert und den Farbmaskierungsgrad der magnetischen Aufzeichnungsschicht und ein Bindeharz und mindestens eines aus schuppenartigem Metallpulver und feinen Plättchen, erhalten aus einem metallischen dünnen Film, enthält, wobei der Gehalt des schuppenartigen Metallpulvers und/oder der feinen Plättchen 10 bis 50 Massen-% bezüglich 100 Gewichtsteilen eines Feststoffgehalts eines Anstrichs für die Lichtreflexionsmengenkontrollschicht beträgt, und einer Glanzüberzugsschicht, welche ein Bindeharz und Glanzpartikel enthält, auf einer magnetischen Aufzeichnungsschicht in dieser Reihenfolge, sodass
die Filmdicke der Lichtreflexionsmengenkontrollschicht und der Gehalt des schuppenartigen Metallpulvers und/oder der feinen Plättchen niedriger ist bzw. sind, als der erforderliche Wert, um die magnetische Aufzeichnungsschicht vollständig zu maskieren, wobei ein kartenähnliches magnetisches Aufzeichnungsmedium mit kontrollierter Helligkeit und Chroma der Hintergrundfarbe erhalten wird.

8. Verfahren zur Herstellung des kartenähnlichen magnetischen Aufzeichnungsmediums gemäß Anspruch 7, wobei die Glanzüberzugsschicht ein Farbpigment enthält.

9. Verfahren zur Herstellung des kartenähnlichen magnetischen Aufzeichnungsmediums gemäß Anspruch 8, wobei der Glanzpartikel ein Partikel ist, der ein schuppenartiges Substrat, überzogen mit einem Metall oder Metalloxid, ist.

10. Verfahren zur Herstellung des kartenähnlichen magnetischen Aufzeichnungsmediums gemäß Anspruch 8, wobei das schuppenartige Substrat aus Glas oder Aluminiumoxid hergestellt ist.

11. Verfahren zur Herstellung des kartenähnlichen magnetischen Aufzeichnungsmediums gemäß Anspruch 7 oder 8, wobei das kartenähnliche magnetische Aufzeichnungsmedium gebildet wird durch Transferieren eines zu transferierenden Laminats, in welchem die Glanzüberzugsschicht, enthaltend Glanzpartikel, die Lichtreflexionsmengenkontrollschicht und die magnetische Aufzeichnungsschicht, auf ein Transfersubstrat in dieser Reihenfolge laminiert sind.

12. Zu transferierendes Laminat, welches im Verfahren zur Herstellung des kartenähnlichen magnetischen Aufzeichnungsmediums gemäß Anspruch 11 verwendet wird.

13. Verfahren zur Herstellung des kartenähnlichen magnetischen Aufzeichnungsmediums gemäß Anspruch 7, wobei die maximale Reflexion diffusen Reflexionslichts bezüglich einfallenden Lichts mit einer Wellenlänge von 400 bis 700 nm in dem Bereich, in welchem die Glanzüberzugsschicht des kartenartigen magnetischen Aufzeichnungsmediums angebracht ist, auf zwischen 20 bis 70% kontrolliert wird durch Einstellen der Helligkeit und Chroma der Hintergrundfarbe.

14. Kartenähnliches magnetisches Aufzeichnungsmedium gemäß Anspruch 1, wobei mindestens eines aus der Filmdicke der Lichtreflexionsmengenkontrollschicht und dem Gehalt des schuppenartigen Metallpulvers und/oder der feinen Plättchen, erhalten aus einem metallischen dünnen Film, niedriger sind, als der erforderliche Wert für das vollständige Maskieren der magnetischen Aufzeichnungsschicht.

15. Magnetisches Aufzeichnungsmedium gemäß Anspruch 1, wobei die Filmdicke der Glanzüberzugsschicht in dem Bereich von 2 bis 5 µm ist.

16. Magnetisches Aufzeichnungsmedium gemäß Anspruch 1, wobei das Gewichtsmengenverhältnis des Feststoffgehalts der Glanzpartikel 20 bis 45 Massen-% bezüglich 100 Gewichtsteilen des Feststoffgehalts eines Anstrichs für die Glanzüberzugsschicht beträgt.

## Revendications

1. Support d'enregistrement magnétique de type carte comprenant un substrat non magnétique et un stratifié contenant une couche d'enregistrement magnétique, dans lequel le stratifié est placé dans au moins une portion du substrat non magnétique ; dans lequel
le stratifié comprend une couche de contrôle de quantité de réflexion de lumière et une couche de revêtement de scintillement, dans lequel
la couche de contrôle de quantité de réflexion de lumière est formée sur la couche d'enregistrement magnétique, a une épaisseur de 2 µm ou moins, comprend une résine de liant et au moins une poudre métallique de type écailles et des paillettes fines obtenues à partir d'une mince pellicule métallique et contrôle le facteur de réflexion de la lumière incidente et un degré de masquage d'une couleur de la couche d'enregistrement magnétique, dans lequel le contenu de poudre métallique de type écailles et/ou de paillettes fines est de 10 à 50 % en masse par rapport à 100 parties en poids d'un contenu solide d'une peinture
pour la couche de contrôle de quantité de réflexion de lumière, et
la couche de revêtement de scintillement est formée sur la couche de contrôle de quantité de réflexion de lumière et comprend une résine de liant et des particules de scintillement ;
ledit contrôle du degré de masquage et du facteur de réflexion est effectué en ajustant (i) l'épaisseur de film de la couche de contrôle de quantité de réflexion de lumière et (ii) un rapport de poids entre la poudre métallique de type écailles et/ou les paillettes fines et un contenu solide d'une peinture pour la couche de contrôle de quantité de réflexion de lumière ; et
le facteur de réflexion maximum de lumière de réflexion diffuse par rapport à des lumières incidentes ayant une longueur d'onde de 400 à 700 nm est de 20 à 70 % sur une portion où la couche de revêtement de scintillement est prédisposée.

2. Support d'enregistrement magnétique de type carte selon la revendication 1, dans lequel le facteur de réflexion maximum de lumière de réflexion diffuse par rapport à des lumières incidentes ayant une longueur d'onde de 400 à 700 nm est de 30 à 60 % sur une portion où la couche de revêtement de scintillement du support d'enregistrement magnétique est formée.

3. Support d'enregistrement magnétique selon la revendication 1, dans lequel les particules de scintillement comprennent un substrat pailleté recouvert d'un métal ou d'un oxyde métallique.

4. Support d'enregistrement magnétique de type carte selon la revendication 1, dans lequel le substrat pailleté est composé de verre ou d'oxyde d'aluminium.

5. Support d'enregistrement magnétique de type carte selon la revendication 1, dans lequel l'épaisseur de film totale de toutes les couches qui sont prédisposées sur la couche d'enregistrement magnétique et comprennent la couche de contrôle de quantité de réflexion de lumière et la couche de revêtement de scintillement est de 6 µm ou moins.

6. Support d'enregistrement magnétique de type carte selon l'une quelconque des revendications 1 à 5, dans lequel la couche de revêtement de scintillement contient un pigment de couleur.

7. Procédé de fabrication d'un support d'enregistrement magnétique de type carte, lequel comprend un substrat non magnétique et une couche d'enregistrement magnétique prédisposé dans au moins une portion du substrat non magnétique et comporte un motif avec une couleur de fond et des points luminescents uniformément distribués dans la couleur de fond sur la couche d'enregistrement magnétique, comprenant :
la formation d'une couche de contrôle de quantité de réflexion de lumière ayant une épaisseur de 2 µm ou moins, qui contrôle le facteur de réflexion de la lumière incidente et un degré de masquage d'une couleur de la couche d'enregistrement magnétique et contient une résine de liant et au moins une poudre métallique de type écailles et des paillettes fines obtenues à partir d'une mince pellicule métallique, dans lequel le contenu de poudre métallique de type écailles et/ou de paillettes fines est de 10 à 50 % en masse par rapport à 100 parties en poids d'un contenu solide d'une peinture pour la couche de contrôle de quantité de réflexion de lumière, et une couche de revêtement de scintillement, qui contient une résine de liant et des particules de scintillement, sur une couche d'enregistrement magnétique dans cet ordre, de sorte que
l'épaisseur de film de la couche de contrôle de quantité de réflexion de lumière et la teneur de la poudre métallique de type écailles et/ou des paillettes fines soit inférieure à la valeur nécessaire pour masquer complètement la couche d'enregistrement magnétique, pour obtenir un support d'enregistrement magnétique de type carte contrôlé en luminance et chrominance de la couleur de fond.

8. Procédé de fabrication du support d'enregistrement magnétique de type carte selon la revendication 7, dans lequel la couche de revêtement de scintillement contient un pigment de couleur.

9. Procédé de fabrication du support d'enregistrement magnétique de type carte selon la revendication 8, dans lequel les particules de scintillement comprennent un substrat pailleté recouvert d'un métal ou d'un oxyde métallique.

10. Procédé de fabrication du support d'enregistrement magnétique de type carte selon la revendication 8, dans lequel le substrat pailleté est composé de verre ou d'oxyde d'aluminium.

11. Procédé de fabrication du support d'enregistrement magnétique de type carte selon la revendication 7 ou 8, dans lequel le support d'enregistrement magnétique de type carte est formé en transférant un stratifié à transférer, dans lequel la couche de revêtement de scintillement contenant des particules de scintillement, la couche de contrôle de quantité de réflexion de lumière et la couche d'enregistrement magnétique sont stratifiées sur un substrat pour le transfert dans cet ordre.

12. Stratifié à transférer qui est utilisé dans le procédé de fabrication du support d'enregistrement magnétique de type carte selon la revendication 11.

13. Procédé de fabrication du support d'enregistrement magnétique de type carte selon la revendication 7, dans lequel le facteur de réflexion maximum de lumière de réflexion diffuse par rapport à des lumières incidentes ayant une longueur d'onde de 400 à 700 nm sur la portion où la couche de revêtement de scintillement est prédisposée dans le support d'enregistrement magnétique de type carte est contrôlé entre 20 à 70 % en réglant la luminance et la chrominance de la couleur de fond.

14. Support d'enregistrement magnétique de type carte selon la revendication 1, dans lequel au moins un parmi une épaisseur de film de la couche de contrôle de quantité de réflexion de lumière et le contenu de poudre métallique de type écailles et/ou des paillettes fines obtenues à partir d'une mince pellicule métallique est inférieur à la valeur nécessaire pour
masquer complètement la couche d'enregistrement magnétique.

15. Support d'enregistrement magnétique selon la revendication 1, dans lequel l'épaisseur de film de la couche de revêtement de scintillement est dans la plage de 2 à 5 µm.

16. Support d'enregistrement magnétique selon la revendication 1, dans lequel un rapport de poids d'un contenu solide des particules de scintillement est de 20 à 45 % en masse par rapport à 100 parties en poids d'un contenu solide d'une peinture pour la couche de revêtement de scintillement.
